# EUROPEAN PATENT APPLICATION

(11) **EP 4 611 164 A1**
(43) Date of publication of application: **03.09.2025**
(21) Application number: 25159972.6
(22) Date of filing: 25.02.2025
(51) Int. Cl.: H01M 50/533, H01M 50/536, H01M 50/538

(54) **BATTERY CELL, METHOD OF MANUFACTURING THE SAME AND BATTERY MODULE**

(30) Priority: 26.02.2024 KR 20240027548; 26.06.2024 KR 20240083758; 05.12.2024 KR 20240179809
(71) Applicant: SK On Co., Ltd., Seoul 03161 (KR)
(72) Inventor: PAK, Byeong Jun, 34124 Daejeon (KR); JU, Seung Hoon, 34124 Daejeon (KR)
(74) Representative: Prüfer & Partner mbB Patentanwälte · Rechtsanwälte

(57) **Abstract**

A battery cell includes a cell case including a sidewall and a top plate having a through-hole formed therein; an electrode terminal coupled to the through-hole and having a coupling groove formed in a bottom portion; an electrode assembly; and a first current collector electrically connecting the electrode terminal to the electrode assembly, wherein the first current collector includes a connection terminal having a protrusion inserted and coupled to the coupling groove, wherein the protrusion is coupled to the electrode terminal by welding performed on an outer side of the cell case, and wherein, in a welded region where the protrusion and the electrode terminal are welded, a thickness of the connection terminal has a value equal to or greater than that of a thickness of the electrode terminal.

## Description

### TECHNICAL FIELD

The present disclosure generally relates to a battery cell (a secondary battery), a method of manufacturing a battery cell and a battery module.

### BACKGROUND

Differently from a primary battery, a secondary battery cell may be easily charged and discharged, and may thus be increasingly used as a power source for various mobile devices, electric vehicles, and energy storage devices.

A secondary battery cell may be manufactured as a pouch-type cell or a can-type cell. A pouch-type cell may have a structure in which an electrode assembly may be accommodated in a flexible cell case (pouch). A can-type cell may have a structure in which an electrode assembly may be accommodated in a rigid cell case (can), and may include a cylindrical cell, a square cell, a coin-type cell, or the like.

### SUMMARY

A secondary battery cell may include an electrode assembly and a cell case in which the electrode assembly is accommodated. The electrode assembly may be connected to a current collector, and the current collector may be welded and electrically connected to an electrode terminal of the battery cell.

In a general battery cell, a current collector and an electrode assembly may be coupled to each other, and in a state in which the electrode assembly may be inserted into a cell case, a horn for ultrasonic welding may be inserted into a hollow portion formed in a center of the electrode assembly and the current collector and the electrode terminal may be ultrasonically welded to each other, thereby electrically connecting the current collector to the terminal portion.

However, when ultrasonic welding is performed through the hollow portion of the electrode assembly while the electrode assembly is inserted into the cell case, welding foreign substances such as fumes or spatter may be formed in the battery cell, which may cause defects in a battery cell due to the foreign substances.

A preferred embodiment of the present disclosure is to provide a battery cell which may address defects caused by foreign substances occurring when coupling an electrode terminal to a current collector, a method of manufacturing the same and a battery module.

A preferred embodiment of the present disclosure is to provide a battery cell which may prevent foreign substances (impurities) caused by welding of an electrode terminal to a current collector from affecting internal components of the battery cell, a method of manufacturing the same and a battery module.

A preferred embodiment of the present disclosure is to provide a battery cell which may address (resolve/improve) damages of an electrode assembly caused by welding heat, a method of manufacturing the same and a battery module.

A preferred embodiment of the present disclosure is to provide a battery cell which may improve rigidity of an electrode terminal, a method of manufacturing the same and a battery module.

A preferred embodiment of the present disclosure is to provide a battery cell which may facilitate a process of electrically connecting an electrode terminal to another battery cell or a battery module, a method of manufacturing the same and a battery module.

A preferred embodiment of the present disclosure is to provide a battery cell in which electrical connection between an electrode terminal and a current collector may be stably guaranteed, a method of manufacturing the same and a battery module.

A preferred embodiment of the present disclosure is to provide a battery cell having improved weldability and/or working speed in relation to an electrode terminal, a method of manufacturing the same and a battery module.

The present disclosure may be widely applied in green technology fields such as an electric vehicle, a battery charging station, and a solar power generation and wind power generation using batteries. Also, the present disclosure may be used in an eco-friendly electric vehicle, a hybrid vehicle, or the like, to prevent climate change by suppressing air pollution and greenhouse gas emissions.

According to an aspect of the present disclosure, a battery cell includes a cell case including a sidewall forming an accommodation space therein and a top plate having a through-hole formed therein; an electrode terminal coupled to the through-hole and having a coupling groove formed in a bottom portion; an electrode assembly disposed in the accommodation space of the cell case; and a first current collector electrically connecting the electrode terminal to the electrode assembly, wherein the first current collector includes a connection terminal having a protrusion inserted and coupled to the coupling groove, wherein the protrusion is coupled to the electrode terminal by welding performed on an outer side of the cell case in a state of being inserted and coupled to the coupling groove, and wherein, in a welded region where the protrusion and the electrode terminal are welded, a thickness of the connection terminal has a value equal to or greater than that of a thickness of the electrode terminal.

The protrusion may be provided as a solid-type, an internal portion of which is filled.

The first current collector may further include a current collecting plate electrically connected to a first electrode tab of the electrode assembly, and the current collecting plate may be connected to the connection terminal.

The connection terminal may further include a support portion coupled to the current collecting plate, and the protrusion may have a shape extending from the support portion and passing through an opening formed in the current collecting plate.

The current collecting plate and the connection terminal may be manufactured separately and coupled to each other or integrated with each other.

The current collecting plate and the connection terminal may be integrated with each other.

A side surface of the protrusion may include an inclined surface, and the inclined surface may have a shape in which a width of a top side is narrower than a width of a bottom side.

The cell case may have a circular cross-sectional shape, and the through-hole may be formed in a center of the top plate.

The electrode terminals may be rivet-coupled to the through-hole of the cell case.

The battery cell may further include a first gasket disposed between the electrode terminal and the through-hole and having electrical insulation properties.

The electrode terminal may have a welding groove for welding between the electrode terminal and the protrusion, formed in a top portion of the coupling groove.

The welding groove may include a spiral shape on a plane or includes at least one closed curve.

The sidewall may have a tube shape, and the top plate has a plate shape covering a top side of the accommodation space, and the sidewall and the top plate may be integrated with each other.

The sidewall may have a tube shape, and the top plate may have a plate shape covering a top side of the accommodation space, and the sidewall and the top plate may be coupled to each other by welding.

The battery cell may further include a cap plate covering a bottom side of the accommodation space of the cell case, wherein the cap plate may be crimping-coupled or welded and coupled to the cell case.

The battery cell may further include a second current collector electrically connected to a second electrode tab of the electrode assembly; and a cap plate covering a bottom side of an accommodation space of the cell case, wherein the second current collector is electrically connected to at least one of the cap plate or the sidewall of the cell case.

According to an aspect of the present disclosure, a method of manufacturing a battery cell includes rivet-coupling an electrode terminal to a through-hole formed in a top plate of a cell case having a shape of which a bottom side is open; electrically connecting a first current collector to an electrode assembly; inserting the electrode assembly into an accommodation space of the cell case; and welding the electrode terminal to the first current collector, wherein the first current collector includes a connection terminal having a protrusion inserted and coupled to a coupling groove formed in a bottom portion of the electrode terminal, wherein the welding includes welding the electrode terminal to the protrusion by applying energy on an outer side of the cell case in a state in which the protrusion is inserted and coupled to the coupling groove, and wherein, in a welded region where the protrusion and the electrode terminal are welded, a thickness of the connection terminal has a value equal to or greater than that of a thickness of the electrode terminal.

The cell case may include a sidewall having a tube shape and forming the accommodation space and a top plate having a plate shape and covering a top side of the accommodation space, and the sidewall and the top plate may be integrated with each other.

The first current collector may further include a current collecting plate electrically connecting a first electrode tab of the electrode assembly to the connection terminal, and the current collecting plate and the connection terminal may be manufactured separately, and coupled to each other by welding or integrated with each other by forging.

The first current collector may further include a current collecting plate electrically connecting a first electrode tab of the electrode assembly to the connection terminal, and the current collecting plate and the connection terminal may be integrated with each other by forging.

The electrode terminal may have a welding groove for welding between the electrode terminal and the protrusion, formed in a top portion of the coupling groove, and the welding may include welding the electrode terminal to the protrusion by irradiating a laser beam along the welding groove.

The method may further include installing a cap plate on an open bottom side of the cell case, wherein the installing the cap plate may include crimping or welding the cap plate to the cell case.

According to an aspect of the present disclosure, a battery module includes a plurality of battery cells; and a module housing configured to accommodate the plurality of battery cells, wherein at least one of the plurality of battery cells includes a cell case including a sidewall forming an accommodation space therein and a top plate having a through-hole formed therein; an electrode terminal coupled to the through-hole and having a coupling groove formed in a bottom portion; an electrode assembly disposed in the accommodation space of the cell case; and a first current collector electrically connecting the electrode terminal to the electrode assembly, wherein the first current collector includes a connection terminal having a protrusion inserted and coupled to the coupling groove, wherein the protrusion is coupled to the electrode terminal by welding performed on an outer side of the cell case in a state of being inserted and coupled to the coupling groove, and wherein, in a welded region where the protrusion and the electrode terminal are welded, a thickness of the connection terminal has a value equal to or greater than that of a thickness of the electrode terminal.

### BRIEF DESCRIPTION OF DRAWINGS

Predetermined aspects, features, and advantages of the present disclosure are illustrated by the following detailed description with reference to the accompanying drawings.
FIG. 1 is a perspective diagram illustrating a battery cell according to a preferred embodiment of present disclosure;
FIG. 2 is an exploded perspective diagram illustrating the battery cell illustrated in FIG. 1;
FIG. 3 is a cross-sectional diagram taken long line I-I' in FIG. 2;
FIG. 4 is a cross-sectional diagram and an enlarged diagram illustrating a portion in which an electrode terminal is installed in the cross-sectional diagram illustrated in FIG. 3;
FIGS. 5 and 6 are cross-sectional diagrams illustrating a modified embodiment of a battery cell illustrated in FIG. 4;
FIG. 7 is a perspective diagram illustrating another embodiment of a first current collector;
FIG. 8A is a cross-sectional diagram illustrating a state in which the first current collector illustrated in FIG. 7 is applied in the cross-section in FIG. 4;
FIGS. 8B and 8C are cross-sectional diagrams illustrating a modified embodiment of the battery cell illustrated in FIG. 8A;
FIG. 9 is a cross-sectional diagram illustrating a battery cell according to another embodiment of present disclosure;
FIG. 10 is a cross-sectional diagram illustrating a battery cell according to another embodiment of present disclosure;
FIG. 11 is a cross-sectional diagram illustrating a battery cell according to another embodiment of present disclosure;
FIG. 12 is a cross-sectional diagram illustrating a state of the electrode terminal illustrated in FIG. 11 before a rivet process;
FIG. 13 is a plan diagram illustrating the electrode terminal illustrated in FIG. 11;
FIG. 14 is a plan diagram illustrating a modified example of the electrode terminal illustrated in FIG. 13;
FIG. 15 is a flowchart illustrating a method of manufacturing a battery cell according to a preferred embodiment of present disclosure;
FIGS. 16A to 16E are cross-sectional diagrams illustrating a method of manufacturing a battery cell according to a preferred embodiment of present disclosure;
FIG. 17 is a cross-sectional diagram illustrating a welding process for the electrode terminal illustrated in FIGS. 11 to 14; and
FIG. 18 is a perspective diagram illustrating a battery module according to a preferred embodiment of present disclosure.

### DETAILED DESCRIPTION

The embodiments of the present disclosure are illustrated in embodiments with reference to the accompanying drawings.

In the drawings, same elements will be indicated by same reference numerals. Also, redundant descriptions and detailed descriptions of known functions and elements which may unnecessarily make the gist of the present disclosure obscure will not be provided. Even when the drawings illustrate components having the same reference number, the plurality of drawings do not refer to the same embodiment.

In embodiments, the terms, "include," "comprise," "is configured to," or the like of the description are used to indicate the presence of features, numbers, steps, operations, elements, portions or combination thereof, and do not exclude the possibilities of combination or addition of one or more features, numbers, steps, operations, elements, portions or combination thereof.

In the description below, the terms such as upper side, upper portion, lower side, lower portion, side surface, front surface, rear surface, or the like, are represented with respect to the direction indicated in the drawings, and when the direction of an object is changed, the terms may also be different.

The terms "first," "second," and the like may be used to distinguish one element from the other, and may not limit a sequence and/or an importance, or others, in relation to the elements. In some cases, a first element may be referred to as a second element, and similarly, a second element may be referred to as a first element.

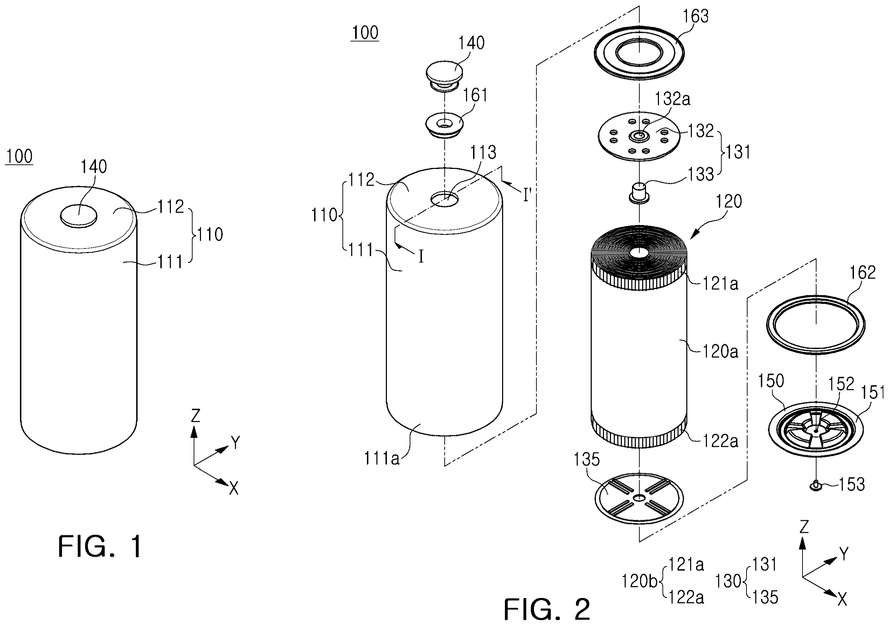

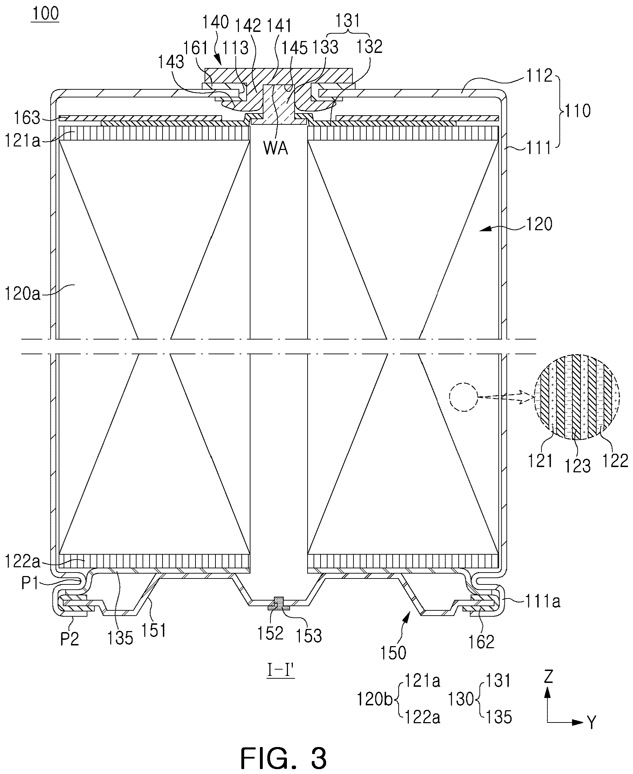

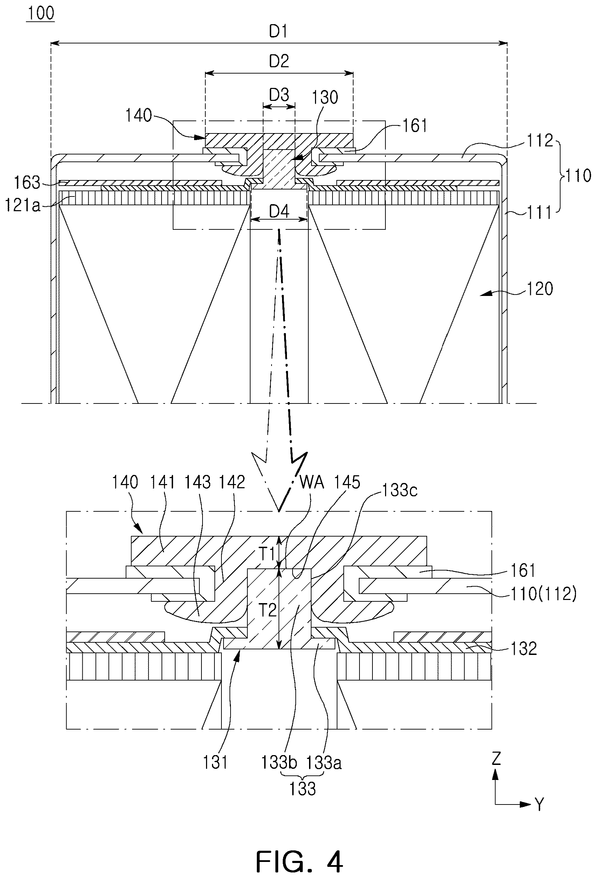

FIG. 1 is a perspective diagram illustrating a battery cell according to a preferred embodiment. FIG. 2 is an exploded perspective diagram illustrating the battery cell illustrated in FIG. 1. FIG. 3 is a cross-sectional diagram taken long line I-I' in FIG. 2. FIG. 4 is a cross-sectional diagram and an enlarged diagram illustrating a portion in which an electrode terminal is installed in the cross-sectional diagram illustrated in FIG. 3.

Referring to FIGS. 1 to 4, a battery cell 100 according to a preferred embodiment includes a cell case 110 including a sidewall 111 forming an accommodation space therein, a cell case 110 including a top plate 112 in which a through-hole 113 is formed, an electrode terminal 140 coupled to a through-hole 113 and having a coupling groove 145 formed in a bottom portion, an electrode assembly 120 disposed in the accommodation space of the cell case 110, and a first current collector 131 electrically connecting the electrode terminal 140 to the electrode assembly 120. The first current collector 131 may include a connection terminal 133 having a protrusion 133b inserted and coupled to the coupling groove 145. The protrusion 133b may be coupled to the electrode terminal 140 by welding performed on an outer side (outside) of the cell case 110 in a state of being inserted and coupled to the coupling groove 145. In a welded region WA where the protrusion 133b and the electrode terminal 140 are welded, a thickness T2 of the connection terminal 133 may have a value equal to or greater than that of a thickness T1 of the electrode terminal 140.

The battery cell 100 according to a preferred embodiment may be configured as a cylindrical cell, but a preferred embodiment thereof is not limited thereto. In a preferred embodiment, the battery cell 100 according to a preferred embodiment, configured as a cylindrical cell, will be described.

The cell case 110 may include a sidewall 111 forming an accommodation space therein, and a top plate 112 having a through-hole 113 formed therein. The accommodation space may be formed by the sidewall 111 and the top plate 112 of the cell case 110. The cell case 110 may have a cylindrical shape of which one side is open. The cell case 110 may have a hollow cylindrical shape including a circular cross-section.

The sidewall 111 may have a tube shape, and the top plate 112 may have a plate shape covering a top side of the accommodation space.

The sidewall 111 may have a circular tube shape. The top plate 112 may have a flat plate shape. Thicknesses of the top plate 112 and the sidewall 111 in the cell case 110 may be varied. For example, the top plate 112 and the sidewall 111 may have the same thickness, and the thickness of the top plate 112 may have a value greater than a value of the thickness of the sidewall 111. The cell case 110 may include a metal material such as aluminum, aluminum alloy, or the like, but the material of the cell case 110 may be varied.

As illustrated in FIGS. 1 to 4, the sidewall 111 and the top plate 112 of the cell case 110 may be integrated with each other. For example, the cell case 110 may be manufactured in a shape in which the sidewall 111 and the top plate 112 are integrated by deep-drawing a metal sheet. When the cell case 110 is integrated with each other, a process for bonding the sidewall 111 and the top plate 112 may not be necessary, such that the manufacturing of the cell case 110 and/or the battery cell 100 may be easily performed and workability may be improved.

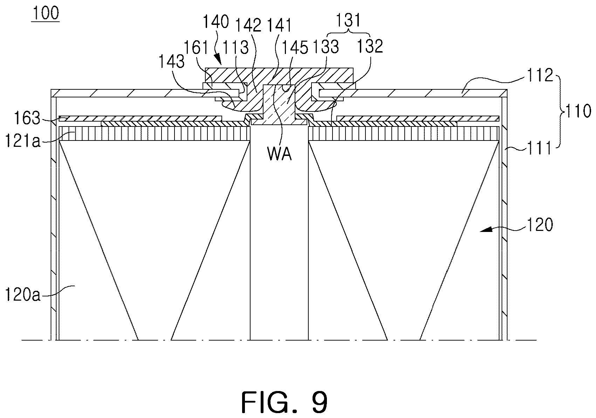

However, the cell case 110 in a preferred embodiment is not limited to the configuration in which the sidewall 111 and the top plate 112 are integrated with each other, and the sidewall 111 and the top plate 112 may be manufactured separately and may be coupled or bonded to each other by welding, or the like (see FIG. 9).

A through-hole 113 may be formed in the top plate 112 of the cell case 110. The through-hole 113 may be provided for coupling the electrode terminal 140. The cell case 110 may have a circular cross-sectional shape, and the through-hole 113 may be formed in a center of the top plate 112. In this case, the electrode terminal 140 coupled to the through-hole 113 may be disposed in a center of the top plate 112.

The electrode terminal 140 may be coupled to the through-hole 113. The electrode terminal 140 may have at least a portion exposed externally of the cell case 110. When the first current collector 131 is connected to a cathode, the electrode terminal 140 may correspond to a cathode terminal, and vice versa.

The electrode terminal 140 may be rivet-coupled to the through-hole 113 of the cell case 110. The electrode terminal 140 may be coupled to the top plate 112 by a rivet process while being inserted into the through-hole 113 of the top plate 112. The electrode terminal 140 may be rivet-coupled to the top plate 112 of the cell case 110. The electrode terminal 140 may have a rivet shape overall.

The electrode terminal 140 may include a first portion 141 disposed on a top side of the top plate 112, a second portion 142 extending from the first portion 141 to a bottom side and passing through a through-hole 113, and a third portion 143 extending from the second portion 142 and disposed on a bottom side of the top plate 112. The first portion 141 may be disposed on an outer side of the cell case 110, and the third portion 143 may be disposed in an accommodation space of the cell case 110. The third portion 143 may have a shape deformed by pressurization and extending to an outer side in a radial direction of the cell case 110. The top plate 112 may be disposed between the first portion 141 and the third portion 143. An outer diameter D2 of the first portion 141 and an outer diameter of the third portion 143 may have values larger than a diameter of the through-hole 113, and an outer diameter of the second portion 142 may have a value smaller than a diameter of the through-hole 113. The outer diameter D2 of the first portion 141 may have a value smaller than an outer diameter D1 of the cell case 110. The outer diameter D2 of the first portion 141 may be configured in consideration of an outer diameter of a busbar connected to the first portion 141.

The electrode terminal 140 may have a coupling groove 145 formed in a bottom portion. The coupling groove 145 may be formed in a bottom portion of the electrode terminal 140 facing the electrode assembly 120. The coupling groove 145 may include a groove formed in the second portion 142. Since the electrode terminal 140 has a coupling groove 145 formed in a bottom portion, a thickness T1 of the electrode terminal 140 in the welded region WA, welded with the connection terminal 133, may have a shape smaller than a surrounding area.

At least a portion of the connection terminal 133 of the first current collector 131 may be inserted into the coupling groove 145. The protrusion 133b of the connection terminal 133 may be inserted into the coupling groove 145 of the electrode terminal 140. The coupling groove 145 may have a shape corresponding to the protrusion 133b of the connection terminal 133. For example, when the protrusion 133b has a cylindrical shape, the coupling groove 145 may include a circular cross-section. The outer diameter D3 of the protrusion 133b of the coupling groove 145 may correspond to or have a value similar to the diameter of the coupling groove 145. When the outer diameter D3 of the protrusion 133b has a value slightly smaller than the diameter of the coupling groove 145, the protrusion 133b may be easily inserted and coupled to the coupling groove 145. The outer diameter D3 of the protrusion 133b may have a value smaller than the diameter of the through-hole 113. The shape of the coupling groove 145 and the protrusion 133b is not limited to a circular cross-section, and may have an angular and/or arc-shaped cross-section.

The battery cell 100 according to a preferred embodiment may further include a first gasket 161 disposed between the electrode terminal 140 and the through-hole 113 and having electrical insulation properties.

The first gasket 161 may be disposed between the electrode terminal 140 and the top plate 112 for insulation between the electrode terminal 140 and the top plate 112. The first gasket 161 may include a material having electrical insulation properties. The first gasket 161 may work as a sealing member sealing between the electrode terminal 140 and the top plate 112.

The electrode terminal 140 may be inserted into the through-hole 113 on an outer side of the top plate 112. Since the outer diameter D2 of the electrode terminal 140 is larger than the diameter of the through-hole 113, the first portion 141 of the electrode terminal 140 may be disposed on an outer side of the top plate 112. The third portion 143 may be deformed by a rivet process, and accordingly, the electrode terminal 140 may be fixed to the top plate 112.

When the rivet process is performed in a state in which the first gasket 161 is disposed on the outer side of the electrode terminal 140, the first gasket 161 may be disposed between the electrode terminal 140 and the top plate 112. The first gasket 161 may seal and/or insulate between the electrode terminal 140 and the top plate 112.

The electrode assembly 120 may be disposed in the accommodation space of the cell case 110. The electrode assembly 120 may include a cathode, an anode, and a separator 123. Each of the cathode and the anode may include a current collector foil (or metal foil) and a composite layer applied to at least one surface of the current collector foil. The composite layer may include an active material. The separator 123 may be interposed between the cathode and the anode and may electrically insulate the cathode and the anode from each other. The cathode, the anode, and the separator 123 may be repeatedly disposed and may form the electrode assembly 120. For example, the electrode assembly 120 may have a winding shape in a state in which the cathode, the separator 123, and the anode are stacked. However, the electrode assembly 120 is not limited to a winding structure. For example, the electrode assembly 120 may have a stacking shape, a zigzag-folding shape, and a stack-folding shape.

The electrode assembly 120 may include a first electrode 121 and a second electrode 122 having different polarities. For example, the first electrode 121 may be provided as a cathode and the second electrode 122 may be provided as an anode, or vice versa.

The electrode assembly 120 may include a body 120a in which a first electrode 121 and a second electrode 122 are arranged with a separator 123 interposed therebetween, and an electrode tab 120b extending from the first electrode 121 or the second electrode 122. The body 120a may include a coating portion (maintenance portion) on which an active material is applied, and the electrode tab 120b may include a non-coating portion (non-coating portion) on which an active material is not applied. The electrode tab 120b may have a shape overlapping or lying down in a predetermined form.

The electrode tab 120b may include a first electrode tab 121a extending from the first electrode 121 and a second electrode tab 122a extending from the second electrode 122. The first electrode tab 121a may include a non-coating portion of the first electrode 121, and the second electrode tab 122a may include a non-coating portion of the second electrode 122.

The electrode tab 120b may be electrically connected to the current collector 130. The current collector 130 may include the first current collector 131 and the second current collector 135. The first electrode tab 121a may be electrically connected to the first current collector 131. As an example, the first electrode tab 121a and the first current collector 131 may be coupled to each other by welding and may be electrically connected to each other. The second electrode tab 122a may be electrically connected to at least one of the second current collector 135, the cap plate 150, or the sidewall 111 of the cell case 110. For example, the second electrode tab 122a and the second current collector 135 may be electrically connected to each other by being in contact with each other, and may be coupled to each other by welding such as ultrasonic welding, laser-beam welding, or the like. However, the method of coupling the second electrode tab 122a to the second current collector 135 is not limited thereto.

The first current collector 131 may electrically connect the electrode terminal 140 to the electrode assembly 120.

The first current collector 131 may be electrically connected to the first electrode tab 121a of the electrode assembly 120 on a bottom side, and may be electrically connected to the electrode terminal 140 on a top side. For example, the first current collector 131 and the first electrode tab 121a may be coupled to each other by welding such as ultrasonic welding, laser-beam welding, resistance welding, or the like. However, the coupling method is not limited thereto. The first current collector 131 and the electrode terminal 140 may be coupled to each other by welding such as laser-beam welding.

The first current collector 131 may include a connection terminal 133 having a protrusion 133b inserted and coupled to a coupling groove 145 of the electrode terminal 140. The protrusion 133b of the connection terminal 133 may be inserted into a coupling groove 145 formed in a bottom portion of the electrode terminal 140.

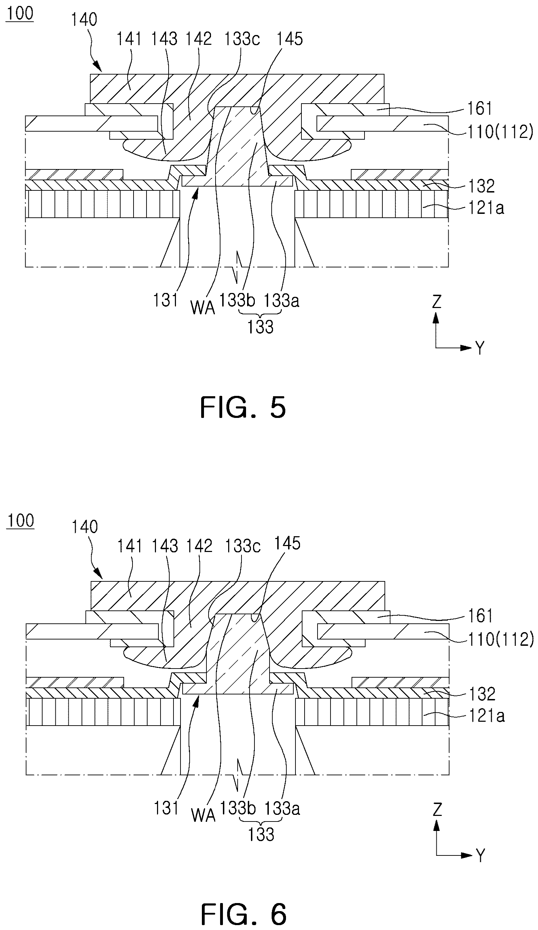

The protrusion 133b of the connection terminal 133 may have a cylindrical shape of a circular cross-section. The protrusion 133b of the connection terminal 133 and the coupling groove 145 of the electrode terminal 140 may have corresponding shapes. For example, when the protrusion 133b has a cylindrical shape, the coupling groove 145 may include a circular cross-section. In order for the protrusion 133b to be easily inserted and coupled to the coupling groove 145, an outer diameter D3 of the protrusion 133b may have a value slightly smaller than a diameter of the coupling groove 145. The outer diameter D3 of the protrusion 133b may have a value smaller than a diameter of the through-hole 113. The shapes of the coupling groove 145 and the protrusion 133b are not limited to a circular cross-section. Also, the diameter of the coupling groove 145, the outer diameter D3 of the protrusion 133b and the diameter of the through-hole 113 may be varied. For example, the side surface 133c of the protrusion 133b may be formed as a surface perpendicular to the welding direction. Alternatively, at least a portion of the side surface 133c of the protrusion 133b may include an inclined surface (see FIGS. 5 and 6)

The first current collector 131 may further include a current collecting plate 132 electrically connected to the first electrode tab 121a of the electrode assembly 120. The current collecting plate 132 may be connected to the connection terminal 133. That is, the first current collector 131 may include a current collecting plate 132 electrically connected to the first electrode tab 121a, and a connection terminal 133 connected to the current collecting plate 132.

The current collecting plate 132 of the first current collector 131 may be welded and coupled to the first electrode tab 121a. The current collecting plate 132 may be coupled to each other by laser-beam welding, ultrasonic welding, resistance welding, or the like, in a state of being disposed to be in contact with the first electrode tab 121a.

The connection terminal 133 may include a protrusion 133b inserted and coupled to the coupling groove 145 of the electrode terminal 140. The connection terminal 133 may further include a support portion 133a coupled to the current collecting plate 132. That is, the connection terminal 133 may include a support portion 133a coupled to the current collecting plate 132, and a protrusion 133b extending from the support portion 133a to a top side and inserted into the coupling groove 145 of the electrode terminal 140. The support portion 133a and the protrusion 133b may be integrated with each other. The support portion 133a and the protrusion 133b may be manufactured integrally by forging, pressing, or the like.

The protrusion 133b of the connection terminal 133 may have a shape extending from the support portion 133a and passing through the opening 132a formed in the current collecting plate 132. The connection terminal 133 may be coupled to the current collecting plate 132 in a state in which the protrusion 133b passes through the opening 132a of the current collecting plate 132. The outer diameter D4 of the support portion 133a may have a value larger than the diameter of the opening 132a and the outer diameter D3 of the protrusion 133b.

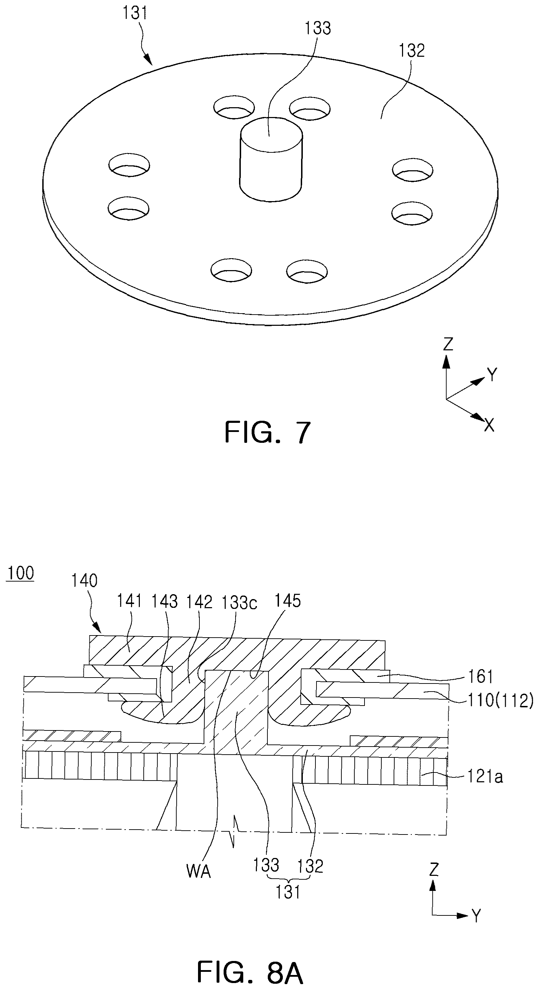

The current collecting plate 132 and the connection terminal 133 may be manufactured separately and coupled to each other. The current collecting plate 132 may have a relatively thin plate shape as compared to the connection terminal 133, and the connection terminal 133 may have a relatively thick cylindrical shape as compared to the current collecting plate 132. Accordingly, when the current collecting plate 132 and the connection terminal 133 are manufactured separately, the current collecting plate 132 and the connection terminal 133 may be easily manufactured, and design freedom for the thickness T2 of the connection terminal 133 may be improved. The connection terminal 133 and the current collecting plate 132 may be bonded to each other by welding. However, the method of coupling the connection terminal 133 to the current collecting plate 132 is not limited thereto, and the other coupling method such as inserting and coupling may be applied. In a preferred embodiment, the current collecting plate 132 and the connection terminal 133 are not limited to a separate-type structure, and may have an integrated-type structure (see FIGS. 7 to 8C).

The connection terminal 133 of the first current collector 131 may be coupled to the electrode terminal 140 by welding. The connection terminal 133 may be coupled to the electrode terminal 140 by welding performed on an outer side of the cell case 110 in a state in which the protrusion 133b is inserted and coupled to the coupling groove 145. The electrode terminal 140 and the connection terminal 133 of the first current collector 131 may be electrically connected to each other by bonding each other through laser-beam welding. The direction in which the laser beam is irradiated during the laser-beam welding may be perpendicular to the top plate 112. In the laser beam irradiation direction, the portion in which the electrode terminal 140 and the protrusion 133b of the connection terminal 133 are in contact with each other may form a welded region WA. The welded region WA may be defined as a portion in which the electrode terminal 140 and the protrusion 133b are in contact with each other and are coupled to each other by welding.

According to a preferred embodiment, the protrusion 133b of the connection terminal 133 may be inserted into the coupling groove 145 formed in a bottom portion of the electrode terminal 140, and the electrode terminal 140 may be electrically connected to the connection terminal 133 of the first current collector 131 through welding externally of the cell case 110. To this end, generation of a welding foreign substance (e.g., a foreign substance such as fumes or spatter) in the battery cell 100 may be prevented. Also, since a metal foreign substance such as fumes or spatter is not generated in the cell case 110, dust collection work for the internal region of the case is not necessary during welding work, and accordingly, costs for installing facility for dust collection may be reduced.

When a laser beam is irradiated on an outer side of the cell case 110, the laser beam may be irradiated on an outer side surface of the electrode terminal 140. That is, the laser beam may be irradiated on the surface of the first portion 141 of the electrode terminal 140. In this case, the surface of the first portion 141 on which the laser beam is irradiated may form a flat surface. When the surface of the first portion 141 is flat, uniform welding may be performed between the first portion 141 of the electrode terminal 140 and the protrusion 133b of the connection terminal 133.

In a preferred embodiment, the welding method between the electrode terminal 140 and the connection terminal 133 may be implemented as laser-beam welding, but the welding method between the components is not limited thereto, and other welding methods such as ultrasonic welding and resistance welding may be applied.

In the welded region WA between the protrusion 133b and the electrode terminal 140, the thickness T2 of the connection terminal 133 may have a value equal to or greater than the thickness T1 of the electrode terminal 140. That is, with respect to the direction (or welding direction) of coupling the electrode terminal 140 to the connection terminal 133, the thickness T1 of the electrode terminal 140 in the welded region WA between the electrode terminal 140 and the connection terminal 133 may have a value equal to or smaller than the thickness T2 of the connection terminal 133 in the welded region WA. The thickness T2 of the connection terminal 133 may be defined as a value of a sum of the thicknesses of the protrusion 133b and the support portion 133a. The thickness T2 of the connection terminal 133 may also be defined as the thickness of the thickest portion in the welded region WA between the connection terminal 133 with respect to the welding direction (Z-axis direction).

Since the thickness T1 of the electrode terminal 140 in the welded region WA has a relatively small value, when a laser beam is irradiated externally of the cell case 110 toward the electrode terminal 140, a penetration depth of the laser beam may be reduced. Accordingly, energy necessary for laser-beam welding may be reduced. According to the embodiment, since small energy is necessary for laser-beam welding, damages to the electrode assembly 120 due to welding heat may be improved.

Since the thickness T2 of the connection terminal 133 in the welded region WA has a value equal to or greater than the thickness T1 of the electrode terminal 140 in the welded region WA, influence of heat generated during laser-beam welding on the electrode assembly 120 may be reduced. When the thickness T2 of the connection terminal 133 is relatively small, heat transferred to the welded region WA may be easily transferred to the electrode assembly 120 through the connection terminal 133, such that the electrode assembly 120 may be easily damaged by the welding heat. According to the embodiment, since the thickness T2 of the connection terminal 133 has a value equal to or greater than the thickness T1 of the electrode terminal 140, the heat transferred to the welded region WA may be absorbed and distributed in the thickness direction of the connection terminal 133 and may be transferred to the electrode assembly 120, such that damages to the electrode assembly 120 due to the welding heat may be prevented or reduced.

Also, since the thickness T2 of the connection terminal 133 in the welded region WA has a value equal to or greater than the thickness T1 of the electrode terminal 140 in the welded region WA, the thickness T1 of the electrode terminal 140 may be reduced in the welded region WA. Accordingly, since the amount of energy necessary for laser-beam welding is small, damages to the electrode assembly 120 due to welding heat may be significantly reduced.

In order to reduce the thickness T1 of the electrode terminal 140 in the welded region WA and to reduce the welding energy, the thickness T2 of the connection terminal 133 may have a value of 1.2 times or more, 1.5 times or more the thickness T1 of the electrode terminal 140.

In order to control the penetration depth when welding the electrode terminal 140 and the connection terminal 133, the size and the shape of the coupling groove 145 of the electrode terminal 140 and the protrusion 133b inserted therein may be varied. For example, in order to control the penetration depth of the welding, the thickness T1 of the electrode terminal 140, the depth, shape and/or structure of the coupling groove 145, and the thickness T2, shape and/or structure of the connection terminal 133 in the welded region WA may be varied.

The protrusion 133b may be provided as a solid-type of which an internal portion is filled. The connection terminal 133 may have a shape of which an internal portion is not hollow. In this case, since the coupling groove 145 portion formed in the electrode terminal 140 may be filled with the protrusion 133b, rigidity of the electrode terminal 140 may be improved. According to the embodiment, even when the thickness T1 of the electrode terminal 140 in the welded region WA has a small value, rigidity of the electrode terminal 140 may be ensured by the connection terminal 133 inserted into the coupling groove 145. Accordingly, the thickness T1 of the electrode terminal 140 may be reduced in the welded region WA, and since the amount of energy necessary for laser-beam welding is small, damages to the electrode assembly 120 caused by welding heat may be significantly reduced.

As an example, the thickness T1 of the electrode terminal 140 in the welded region WA may have a value of 0.5 mm or more or 5 mm or less. In the welded region WA, the thickness T1 of the electrode terminal 140 may have a value of 0.5 mm or more, 1 mm or more, 1.5 mm or more, or 2 mm or more. The thickness T1 of the electrode terminal 140 may have a thickness which may maintain the shape of the first portion 141 in the welded region WA during laser-beam welding. The thickness T1 of the electrode terminal 140 in the welded region WA may have a value of 5 mm or less, 4 mm or less, or 3 mm or less. The thickness T2 of the connection terminal 133 in the welded region WA may be configured to have a value of the thickness T1 of the electrode terminal 140 or more. For example, the thickness T2 of the connection terminal 133 in the welded region WA may have a value of 1.5 mm or more, 2 mm or more, 3 mm or more, 4 mm or more, or 5 mm or more. The thickness T2 of the connection terminal 133 in the welded region WA may have a value of 10 mm or less, 8 mm or less, 7 mm or less, 6 mm or less, or 5.5 mm or less.

An insulating member 163 having electrical insulation properties may be disposed between the first current collector 131 and the cell case 110 for electrical insulation between the first current collector 131 and the cell case 110. As an example, the insulating member 163 may be disposed between the current collecting plate 132 and the top plate 112. The shape or the arrangement position of the insulating member 163 may be varied.

The battery cell 100 according to a preferred embodiment may further include a cap plate 150 covering a bottom side of the accommodation space of the cell case 110. The cap plate 150 may be crimping-coupled or welded and coupled to the cell case 110.

The cap plate 150 may cover the accommodation space on the opposite side from the electrode terminal 140.

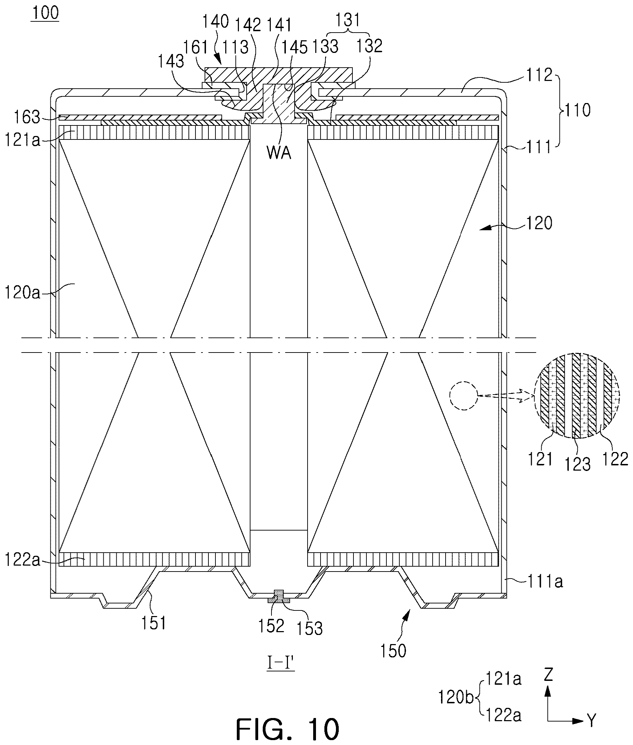

The cap plate 150 may be coupled to the sidewall 111 of the cell case 110 by crimping, welding, or the like. As an example, the beading portion P1 may be formed by performing a beading process may be performed on an open end 111a of the sidewall 111 of the cell case 110, and in a state in which the cap plate 150 is disposed on the beading portion P1, the crimping portion P2 may be formed by performing a crimping process the end 111a of the sidewall 111 and the cap plate 150. Alternatively, the cap plate 150 may also be welded and coupled to the end 111a of the sidewall 111 (see FIG. 10).

An injection port 152 for injecting an electrolyte into the cell case 110 may be formed in the cap plate 150. The injection port 152 may be formed in a center of the body 151 of the cap plate 150, but the position and size thereof may be varied. The injection port 152 may be sealed with the injection port cap 153 after the electrolyte is injected.

A second gasket 162 for sealing may be disposed between the cap plate 150 and the sidewall 111 of the cell case 110. The second gasket 162 may work as a sealing member sealing between the cap plate 150 and the sidewall 111.

The battery cell 100 according to a preferred embodiment may further include a cap plate 150 covering a bottom side of the accommodation space of the cell case 110 and a second current collector 135 electrically connected to the second electrode tab 122a of the electrode assembly 120.

A top surface of the second current collector 135 may be configured to be bonded to or in contact with the second electrode tab 122a so as to be electrically connected to the second electrode tab 122a. Welding may be used to bond the second current collector 135 to the second electrode tab 122a. For example, the second current collector 135 and the second electrode tab 122a may be bonded to each other by ultrasonic welding, laser-beam welding, resistance welding, or the like. Alternatively, the second current collector 135 may be electrically connected in a state in which of being in contact with each other without being bonded to the second electrode tab 122a.

The second current collector 135 may be electrically connected to at least one of the cap plate 150 or the sidewall 111 of the cell case 110. FIG. 3 illustrates the configuration in which the second current collector 135 is electrically connected to the cap plate 150 and the sidewall 111 of the cell case 110. In this case, the cap plate 150 and the cell case 110 may have second polarity. For example, when the second electrode tab 122a is configured as an anode tab, the cap plate 150 and the cell case 110 may be charged as an anode. The object electrically connected to the second current collector 135 may be varied depending on the design specifications of the battery cell 100.

The second current collector 135 may not be disposed, and the second electrode tab 122a may be configured to be electrically connected directly to the cap plate 150 (see FIG. 10).

FIGS. 5 and 6 are cross-sectional diagrams illustrating a modified embodiment of a battery cell illustrated in FIG. 4.

As compared to the battery cell 100 illustrated in FIGS. 1 to 4, the battery cell 100 illustrated in FIGS. 5 and 6 may be different in that the shapes of the coupling groove 145 of the electrode terminal 140 and the protrusion 133b of the connection terminal 133 may be different. The descriptions of the example in FIGS. 1 to 4 other than the difference may also be applied to FIGS. 5 and 6.

Referring to FIGS. 5 and 6, a connection terminal 133 may include a support portion 133a and a protrusion 133b. The protrusion 133b may be inserted and coupled to the coupling groove 145 of the electrode terminal 140.

The side surface 133c of the protrusion 133b may include an inclined surface, and the inclined surface may have a shape in which a width of the top side is narrower than that of the bottom side. For example, an inclined surface may be formed on at least a portion of the side surface 133c of the protrusion 133b, and the width of the protrusion 133b formed by the inclined surface may have a shape in which a width thereof decreases toward the top side.

As illustrated in FIG. 5, the inclined surface may be formed on a side surface 133c of the protrusion 133b throughout the entire height of the protrusion 133b, and as illustrated in FIG. 6, the inclined surface may be formed only on the side surface 133c of the top side of the protrusion 133b.

The coupling groove 145 of the electrode terminal 140 may have a shape corresponding to the shape of the protrusion 133b. For example, the coupling groove 145 of the electrode terminal 140 may also have an inclined surface corresponding to the inclined surface formed on the side surface 133c of the protrusion 133b. Alternatively, the coupling groove 145 of the electrode terminal 140 may be formed as a vertical surface similarly to FIG. 4. In this case, a space may be formed between the inner surface of the coupling groove 145 and the inclined surface of the protrusion 133b.

When the side surface 133c of the protrusion 133b includes the inclined surface, the protrusion 133b of the first current collector 131 may be easily inserted into the coupling groove 145 of the electrode terminal 140. That is, when the protrusion 133b is inserted and coupled to the coupling groove 145, the inclined surface of the protrusion 133b may guide insertion of the protrusion 133b.

FIG. 7 is a perspective diagram illustrating another embodiment of a first current collector.

As illustrated in FIG. 7, a first current collector 131 may include a current collecting plate 132 and a connection terminal 133. The current collecting plate 132 may have a relatively thin plate shape as compared to the connection terminal 133, and the connection terminal 133 may have a relatively thick cylindrical shape as compared to the current collecting plate 132.

The current collecting plate 132 and the connection terminal 133 may be integrated with each other. For example, in the first current collector 131, the current collecting plate 132 and the connection terminal 133 may be integrated with each other through forging, or the like. In the case of performing forging, the current collecting plate 132 having a relatively small thickness and the thick connection terminal 133 having a relatively great thickness may be integrated.

FIG. 8A is a cross-sectional diagram illustrating a state in which the first current collector illustrated in FIG. 7 is applied in the cross-section in FIG. 4.

As compared to the battery cell 100 illustrated in FIGS. 1 to 4, the battery cell 100 illustrated in FIG. 8A may be different in that the current collecting plate 132 and the connection terminal 133 of the first current collector 131 have an integrated-type structure. The descriptions of the example in FIGS. 1 to 4 other than the difference may also be applied to FIG. 8A.

Referring to FIG. 8A, the current collecting plate 132 of the integrated-type first current collector 131 may be electrically connected to the first electrode tab 121a, and the connection terminal 133 may be inserted and coupled to the coupling groove 145 of the electrode terminal 140.

In the embodiment in FIG. 8A, the connection terminal 133 may correspond to the support portion 133a and the protrusion 133b in FIG. 4. The thickness or the height of the connection terminal 133 in the embodiment in FIG. 8A may be defined as the entire thickness or the entire height of the first current collector 131 in the welded region WA.

The protrusion (133b in FIG. 4) of the connection terminal 133 may be welded and coupled to the electrode terminal 140 by welding performed on the outer side of the cell case 110 in a state of being inserted and coupled to the defective groove of the electrode terminal 140.

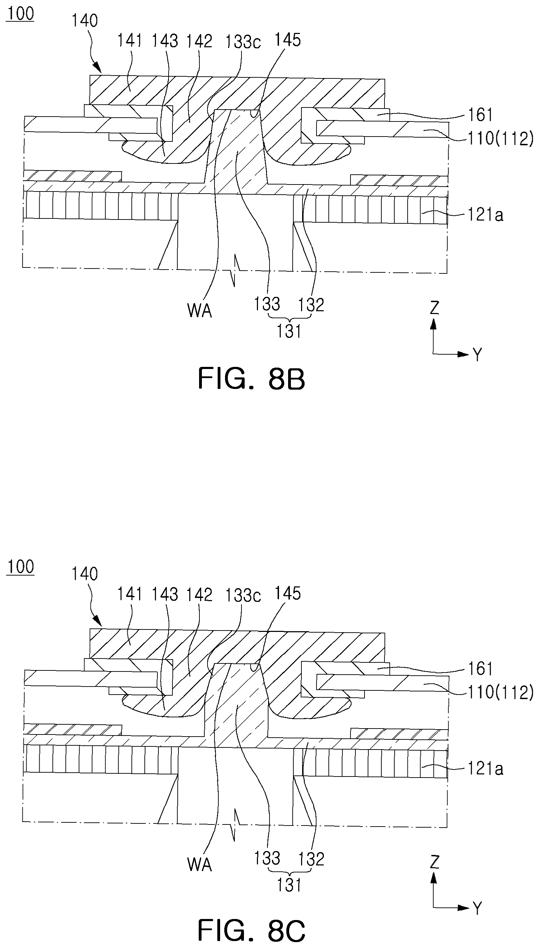

FIGS. 8B and 8C are cross-sectional diagrams illustrating a modified embodiment of the battery cell illustrated in FIG. 8A.

FIG. 8B illustrates a state in which the separate-type first current collector 131 illustrated in FIG. 5 is modified to an integrated-type first current collector 131, and FIG. 8C illustrates a state in which the separate-type first current collector 131 illustrated in FIG. 6 is modified to an integrated-type first current collector 131. As compared to the embodiment in FIG. 8A, FIGS. 8B and 8C may be different in that an inclined surface may be formed on the side surface 133c of the connection terminal 133. The descriptions of the example in FIGS. 1 to 8A other than the difference may be applied.

Referring to FIGS. 8B and 8C, the current collecting plate 132 of the integrated-type first current collector 131 may be electrically connected to the first electrode tab 121a, and the connection terminal 133 may be welded to the electrode terminal 140 in a state of being inserted and coupled to the coupling groove 145 of the electrode terminal 140.

In the embodiment in FIGS. 8B and 8C, the connection terminal 133 may correspond to the support portion 133a and the protrusion 133b in FIGS. 5 and 6, respectively. In the embodiment in FIGS. 8B and 8C, the thickness or height of the connection terminal 133 may be defined as the entire thickness or the entire height of the first current collector 131 in the welded region WA.

The side surface 133c of the protrusion (133b in FIG. 5 and FIG. 6) of the connection terminal 133 may include an inclined surface, and the inclined surface may have a shape in which the width of the top side is narrower than that of the bottom side.

The inclined surface may be formed on the side surface 133c of the connection terminal 133 throughout the entire height of the connection terminal 133 as illustrated in FIG. 8B, or may be formed only on the side surface 133c of the top side of the connection terminal 133 as illustrated in FIG. 8C.

When the side surface 133c of the connection terminal 133 includes an inclined surface, the connection terminal 133 of the first current collector 131 may be easily inserted into the coupling groove 145 of the electrode terminal 140. That is, when the connection terminal 133 is inserted and coupled to the coupling groove 145, the inclined surface of the connection terminal 133 may guide insertion of the protrusion 133b.

FIG. 9 is a cross-sectional diagram illustrating a battery cell according to another embodiment.

As compared to the embodiments in FIGS. 1 to 4, the battery cell 100 in FIG. 9 may be different in that the structure of the cell case 110 may be different. The descriptions of the example in FIGS. 1 to 4 may also be applied to the battery cell 100 in FIG. 9, and the differences may be mainly described.

In the battery cell 100 illustrated in FIG. 9, the cell case 110 may include a sidewall 111 and a top plate 112. In the embodiment in FIG. 9, the top plate 112 may be defined as a plate of a portion to which the electrode terminal 140 is coupled.

The sidewall 111 may have a tube shape, and the top plate 112 may have a plate shape covering the top side of the accommodation space. The sidewall 111 and the top plate 112 may have separate-type structures without being integrated with each other. In the embodiment in FIG. 9, the sidewall 111 and the top plate 112 may be coupled to each other by welding.

The cell case 110 in a preferred embodiment may be applied to the example in which the sidewall 111 and the top plate 112 have an integrated-type structure, and also to the example in which the sidewall 111 and the top plate 112 have a separate-type structure as in the embodiment illustrated in FIG. 9. For example, the embodiment in FIG. 9 may be applied to the example in which it may be difficult to manufacture the integrated-type cell case 110 by deep-drawing due to an increase in the height of the sidewall 111.

FIG. 10 is a cross-sectional diagram illustrating a battery cell according to another embodiment.

As compared to the embodiments in FIGS. 1 to 4, the battery cell 100 in FIG. 10 may be different in that the coupling structure between the cap plate 150 and the sidewall 111 of the cell case 110 may be different. The descriptions of the example in FIGS. 1 to 4 may also be applied to the battery cell 100 in FIG. 9, and the difference may be mainly described.

The battery cell 100 illustrated in FIG. 10 may include a cell case 110, an electrode terminal 140, an electrode assembly 120, and a first current collector 131, and may further include a cap plate 150 covering a bottom side of an accommodation space of the cell case 110.

The cap plate 150 may cover the accommodation space on the opposite side to the electrode terminal 140. The cap plate 150 may be welded and coupled to the cell case 110. The cap plate 150 may be coupled to each other by welding to the sidewall 111 of the cell case 110. The cap plate 150 may be welded in a state in which the circumference of the body 151 is in contact with the end 111a of the sidewall 111.

In the embodiment in FIG. 10, the cap plate 150 may be electrically connected to the second electrode tab 122a. The cap plate 150 may be coupled to the second electrode tab 122a by welding and may be electrically connected to the second electrode tab 122a. Alternatively, the cap plate 150 may be in contact with the second electrode tab 122a by pressurization such that the cap plate 150 may be electrically connected to the second electrode tab 122a. When the second electrode tab 122a is directly electrically connected to the cap plate 150, the second current collector (135 in FIG. 3) may not be disposed.

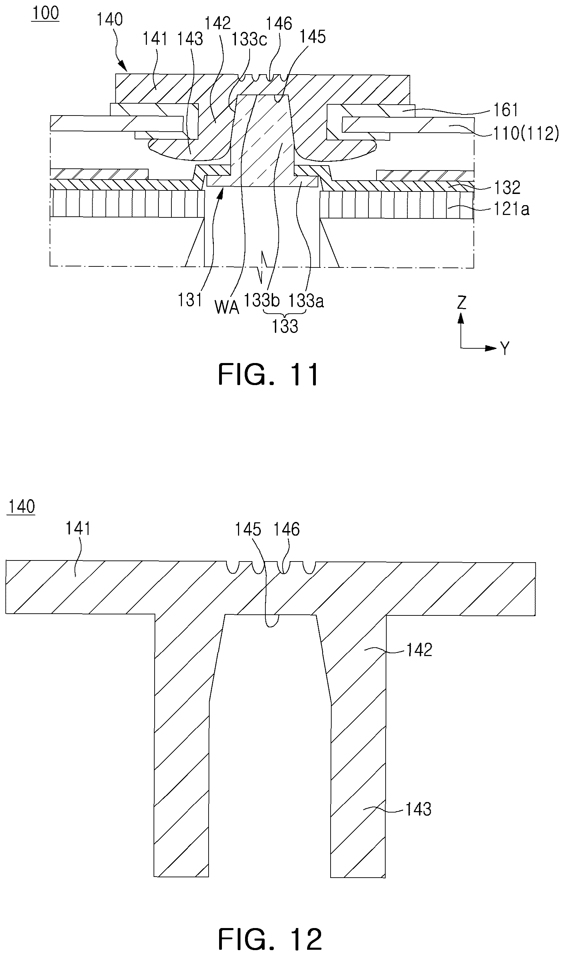

FIG. 11 is a cross-sectional diagram illustrating a battery cell according to another embodiment. FIG. 12 is a cross-sectional diagram illustrating a state of the electrode terminal illustrated in FIG. 11 before a rivet process.

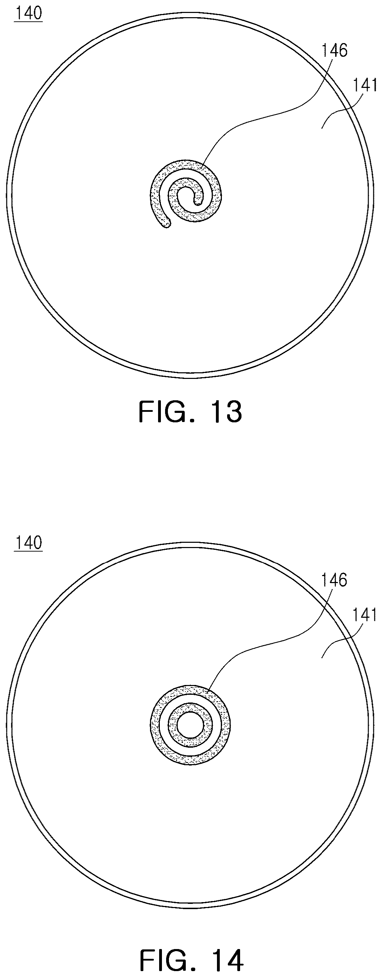

FIG. 13 is a plan diagram illustrating the electrode terminal illustrated in FIG. 11. FIG. 14 is a plan diagram illustrating a modified example of the electrode terminal illustrated in FIG. 13.

As compared to the battery cell 100 illustrated in FIGS. 1 to 10, the battery cell 100 illustrated in FIG. 11 may be different in that a welding groove 146 may be formed on the top surface 141a of the electrode terminal 140. The descriptions of the example in FIGS. 1 to 10 other than the difference may also be applied to FIG. 11.

Referring to FIGS. 11 to 14, the electrode terminal 140 may have a welding groove 146 formed on the top portion of the coupling groove 145 for welding between the electrode terminal 140 and the protrusion 133b. The welding groove 146 may be formed on the first portion 141 of the electrode terminal 140, and may have a recessed shape from the top surface 141a of the first portion 141 to the bottom side.

The welding groove 146 may form a welding path for welding. For example, when laser-beam welding the electrode terminal 140 to the protrusion 133b of the connection terminal 133, the welding groove 146 may form a path along which the laser beam is irradiated. Since the welding is performed by irradiating the laser beam along the welding groove 146, the welding of the electrode terminal 140 may be easily performed.

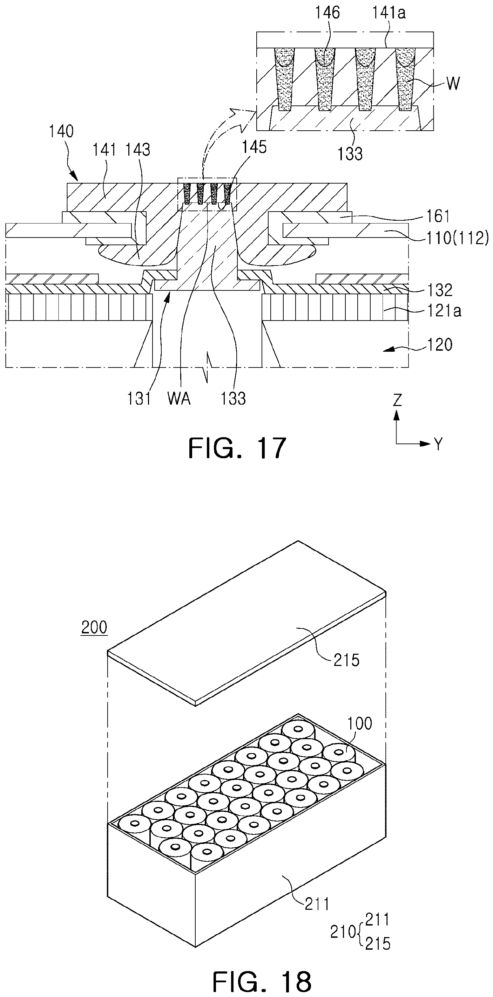

The welding groove 146 may be recessed in the top surface 141a of the electrode terminal 140, such that protrusion of the welding bead or the cured region (W in FIG. 17) beyond the top surface 141a of the electrode terminal 140 may be prevented or reduced. That is, the welding groove 146 may be a space in which molten metal is accommodated during laser-beam welding. Since the welding groove 146 is formed, a protruding portion may not be formed on the top surface 141a of the electrode terminal 140 in the cured state after welding. When electrically connecting the battery cell 100, the electrode terminal 140 may be welded to a busbar. Since the top surface 141a of the electrode terminal 140 may maintain a flat surface even after welding the electrode terminal 140 and the protrusion 133b, the process of electrically connecting the electrode terminal 140 to another battery cell or battery module may be easily performed.

The depth of the welding groove 146 may be configured such that the molten metal does not protrude beyond the top surface 141a of the electrode terminal 140 after curing. For example, when the amount of the molten metal is large, the depth of the welding groove 146 may have a larger value. The cross-sectional shape of the welding groove 146 may include a semicircular groove, an arc-shaped groove, or the like. Alternatively, the cross-sectional shape of the welding groove 146 may also be configured as a quadrangular groove.

The welding groove 146 may include an open curve or a closed curve shape. The welding groove 146 may include a spiral shape on a plane or at least one closed curve. The welding groove 146 may form a welding path of 360 degrees or more.

For example, the welding groove 146 may have a spiral shape on a plane when viewed from the top surface, as illustrated in FIG. 13. The welding groove 146 may have an open curve shape extending outwardly from the center. When the welding groove 146 has an open curve shape, such as a spiral shape on a plane, welding may be completed with only one welding path, such that weldability and/or working speed may be improved. The spiral shape of the welding groove 146 may have an angle of 360 degrees or more. For example, the spiral shape of the welding groove 146 may have an angle of 360 degrees or more, 540 degrees or more, or 720 degrees or more. In this case, the welding groove 146 may form a welding path having an arc shape of 360 degrees or more, 540 degrees or more, or 720 degrees or more. The angle of the spiral shape of the welding groove 146 may be configured in consideration of the welded area of the electrode terminal. As the angle of the spiral shape of the welding groove 146 increases, the welding path may be elongated, and accordingly, electrical connection between the electrode terminal 140 and the protrusion 133b may be stably ensured.

Alternatively, the welding groove 146 may include at least one closed curve when viewed from the top surface, as illustrated in FIG. 14. For example, the welding groove 146 may include a single circular shape or an elliptical shape, and in this case, the welding groove 146 may form a welding path of 360 degrees. The welding groove 146 may include two or more circular shapes or elliptical shapes, and in this case, the welding groove 146 may form a welding path of an arc shape of a total of 720 degrees or more. The number of closed curves of the welding groove 146 may be configured in consideration of the welded area of the electrode terminal. As the angle formed by the welding groove 146 increases, the welding path may be elongated, and accordingly, electrical connection between the electrode terminal 140 and the protrusion 133b may be stably ensured.

The electrode terminal 140 may be rivet-coupled to a through-hole (FIG. 113 in FIG. 2) formed in the top plate 112 of the cell case 110. Referring to FIG. 12, the electrode terminal 140 before the rivet process may include a first portion 141 of a plane shape, a second portion 142 extending from the first portion 141 to the bottom side, and a third portion 143 extending from the second portion 142 to the bottom side. A welding groove 146 may be formed in the first portion 141, and a coupling groove 145 may be formed in the second portion 142. The third portion 142 may spread in a direction of an outer side of the side surface by the rivet process. The shape of the electrode terminal 140 illustrated in FIG. 12 other than the welding groove 146 may also be applied to the electrode terminal 140 in FIGS. 1 to 10.

The configuration in which the welding groove 146 is formed in the electrode terminal 140 may also be applied to the embodiment in FIGS. 1 to 10.

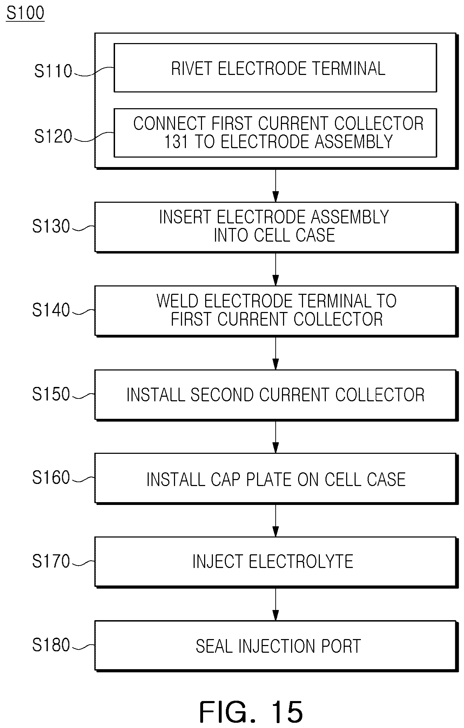

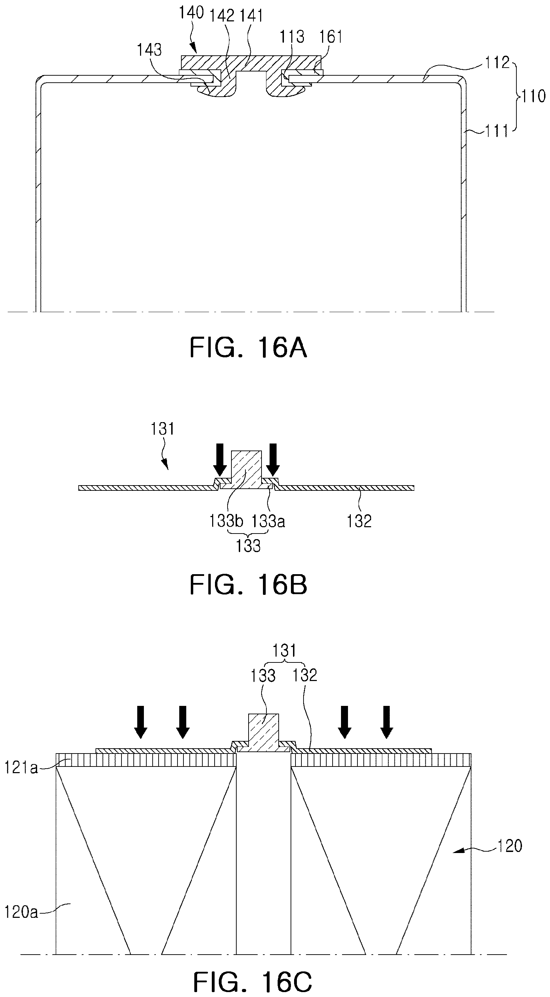

FIG. 15 is a flowchart illustrating a method of manufacturing a battery cell according to a preferred embodiment. FIGS. 16A to 16E are cross-sectional diagrams illustrating a method of manufacturing a battery cell according to a preferred embodiment. FIGS. 16A to 16E illustrate a method of manufacturing the battery cell 100 (S100) illustrated in FIGS. 1 to 4.

Referring to FIG. 15 together with FIGS. 1 to 4, a method of manufacturing the battery cell 100 (S100) according to a preferred embodiment includes rivet-coupling an electrode terminal 140 to a through-hole 113 formed in a top plate 112 of a cell case 110 having a shape of which a bottom side is open (S110), electrically connecting a first current collector 131 to an electrode assembly 120 (S120), inserting the electrode assembly 120 into an accommodation space of the cell case 110 (S130), and welding the electrode terminal 140 to the first current collector 131 (S140). The first current collector 131 may include a connection terminal 133 having a protrusion 133b inserted and coupled to a coupling groove 145 formed in a bottom portion of the electrode terminal 140, and the welding process (S140) may include welding the electrode terminal 140 to the protrusion 133b by applying energy on an outer side of the cell case 110 in a state in which the protrusion 133b is inserted and coupled to the coupling groove 145. The thickness T2 of the connection terminal 133 in the welded region WA between the protrusion 133b and the electrode terminal 140 may have a value equal to or greater than the thickness T1 of the electrode terminal 140 in the welded region WA.

Referring to FIGS. 15 to 16E together with FIGS. 1 to 4, a method of manufacturing the battery cell 100 (S100) may be described. The description of the battery cell 100 described with reference to FIGS. 1 to 14 may also be applied to the method of manufacturing the battery cell 100 (S100).

Referring to FIG. 16A, the cell case 110 may include a sidewall 111 and a top plate 112, and a through-hole 113 may be formed in the top plate 112. In the process (S110) of rivet-coupling the electrode terminal 140, the electrode terminal 140 may be inserted into the through-hole 113 on the outer side of the top plate 112. The first portion 141 of the electrode terminal 140 may be disposed on the outer side of the top plate 112, and the second portion 142 and the third portion 143 may be inserted into the through-hole 113. By the rivet process, the third portion 143 may be deformed to the outer side in the radial direction, and the electrode terminal 140 may be fixed to the top plate 112.

When the rivet process is performed in a state in which the first gasket 161 is disposed on the outer side of the electrode terminal 140, the first gasket 161 may be disposed between the electrode terminal 140 and the top plate 112. The first gasket 161 may seal and/or insulate between the electrode terminal 140 and the top plate 112.

The electrically connecting the first current collector 131 (S120) may include a process for preparing the first current collector 131.

Referring to FIG. 16B, the first current collector 131 may include the current collecting plate 132 and the connection terminal 133. The connection terminal 133 may include a support portion 133a coupled to the current collecting plate 132 and a protrusion 133b extending from the support portion 133a to the top side. The current collecting plate 132 may electrically connect the first electrode tab 121a of the electrode assembly 120 to the connection terminal 133.

The current collecting plate 132 and the connection terminal 133 may be manufactured separately and coupled to each other by welding. Since the current collecting plate 132 has a plate shape having a relatively small thickness as compared to the connection terminal 133, and the connection terminal 133 has a cylindrical shape having a relatively great thickness as compared to the current collecting plate 132, when the current collecting plate 132 and the connection terminal 133 are manufactured separately, both components may be easily manufactured.

The connection terminal 133 may be coupled to the current collecting plate 132 in a state such that the protrusion 133b passes through the opening (132a in FIG. 2) of the current collecting plate 132. For example, the connection terminal 133 and the current collecting plate 132 may be bonded to each other by welding.

As in the embodiment illustrated in FIGS. 7 to 8C, the current collecting plate 132 and the connection terminal 133 may be integrated with each other by forging. In the example in which the current collecting plate 132 and the connection terminal 133 are integrated, the coupling the connection terminal 133 to the current collecting plate 132 may not be provided. The assembly process of the battery cell 100 may thus be simplified.

Referring to FIG. 16C, the electrically connecting the first current collector 131 to the electrode assembly 120 (S120) may include electrically connecting the first current collector 131 to the first electrode tab 121a of the electrode assembly 120. The first current collector 131 may be welded to the first electrode tab 121a. For example, the first current collector 131 may be ultrasonically welded, laser beam welded, or resistance welded to the first electrode tab 121a.

The order of the rivet-coupling the electrode terminal 140 to the through-hole 113 formed in the top plate 112 (S110) and the electrically connecting the first current collector 131 to the electrode assembly 120 (S120) may be changed or performed in parallel.

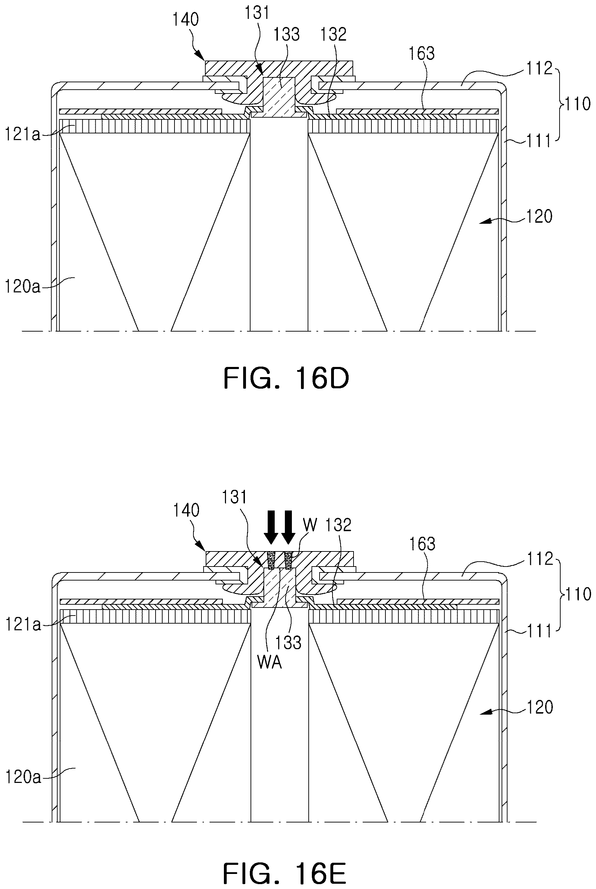

Referring to FIG. 16D together with FIG. 4, the inserting the electrode assembly 120 into the accommodation space of the cell case 110 (S130) may include inserting the electrode assembly 120 into the cell case 110 through the open bottom portion of the cell case 110. The electrode assembly 120 may be inserted into the cell case 110 in a state in which the first current collector 131 faces the bottom portion of the electrode terminal 140. Before accommodating the electrode assembly 120 in the cell case 110, the electrode assembly 120 may have a state in which the first current collector 131 is connected to the first electrode tab 121a, and the cell case 110 may have a state in which the electrode terminal 140 is rivet-coupled to the top plate 112. When the electrode assembly 120 is inserted into the cell case 110, the protrusion 133b of the first current collector 131 may be inserted and coupled to the coupling groove 145 formed in the bottom portion of the electrode terminal 140. An insulating member 163 may be disposed between the top case and the first current collector 131.

Referring to FIG. 16E together with FIG. 4, the welding process (S140) may include electrically connecting the electrode terminal 140 to the first current collector 131 by welding. The welding process (S140) may include welding the electrode terminal 140 and the protrusion 133b by applying energy from on outer side of the cell case 110 in a state in which the protrusion 133b is inserted and coupled to the coupling groove 145. For example, the electrode terminal 140 and the protrusion 133b of the connection terminal 133 may be coupled to each other by laser-beam welding.

According to the embodiment, since the welding is performed externally of the cell case 110, generation of welding foreign substances (e.g., foreign substances such as fumes or spatter) in the battery cell 100 may be prevented. Also, since no metal foreign substances such as fumes or spatter are generated in the cell case 110, dust collection work for the internal portion of the case may not be necessary during the welding work, and accordingly, the cost for installing facility for dust collection may be reduced.

Since the laser beam is irradiated externally of the cell case 110, a welding bead or a cured region W after melting may be formed in the portion in which the laser beam is irradiated. The cured region W after melting may extend from the top portion of the electrode terminal 140 to the protrusion 133b, such that the electrode terminal 140 and the protrusion 133b may be physically and electrically connected.

The thickness T2 of the connection terminal 133 in the welded region WA between the protrusion 133b and the electrode terminal 140 may have a value equal to or greater than the thickness T1 of the electrode terminal 140 in the welded region WA.

Since the thickness T1 of the electrode terminal 140 in the welded region WA has a relatively small value, energy necessary for laser-beam welding may be reduced, and damages to the electrode assembly 120 caused by the welding heat may be improved.

Since the thickness T2 of the connection terminal 133 in the welded region WA has a value equal to or greater than the thickness T1 of the electrode terminal 140 in the welded region WA, the thickness T1 of the electrode terminal 140 may be reduced in the welded region WA. Accordingly, since the amount of energy necessary for laser-beam welding is relatively small, damages to the electrode assembly 120 caused by welding heat may be significantly reduced.

The cell case 110 may include a tube-shaped sidewall 111 forming an accommodation space and a plate-shaped top plate 112 covering the top side of the accommodation space. The sidewall 111 and the top plate 112 may be integrated with each other. The cell case 110 may be manufactured in a shape in which the sidewall 111 and the top plate 112 are integrated by deep-drawing a metal sheet. Since the process of bonding the sidewall 111 and the top plate 112 is not necessary when the cell case 110 is integrated with each other, the manufacturing of the cell case 110 and/or the battery cell 100 may be easily performed and workability may be improved.

Referring back to FIG. 15, a method of manufacturing the battery cell 100 (S100) according to a preferred embodiment may include a process (S150) of installing a second current collector 135. The second current collector 135 may be electrically connected to the second electrode tab 122a of the electrode assembly 120. The second current collector 135 may be welded and coupled to the second electrode tab 122a, or may also be electrically connected in a state of being in contact with the second electrode tab 122a. The disposing the second current collector 135 (S150) may be performed before the inserting the electrode assembly 120 into the cell case 110 (S130), or may be performed after the welding the electrode terminal 140 and the first current collector 131 (S140). When the second electrode tab 122a and the cap plate 150 are directly electrically connected to each other, the disposing the second current collector 135 (S150) may not be performed.

A method of manufacturing the battery cell 100 (S100) according to a preferred embodiment may further include installing a cap plate 150 on an open bottom side of a cell case 110 (S160). The installing the cap plate 150 (S160) may couple the cap plate 150 to the cell case 110 by crimping or welding. For example, as illustrated in FIG. 4, the cap plate 150 may be coupled to the end 111a of the sidewall 111 through a beading process and a crimping process. Alternatively, as illustrated in FIG. 10, the cap plate 150 may be coupled to the end 111a of the sidewall 111 by welding.

A method of manufacturing the battery cell 100 (S100) according to a preferred embodiment may further include injecting an electrolyte (S170). The electrolyte injection may be performed through the injection port 152 formed in at least one of the cap plate 150, the electrode terminal 140, or the cell case 110. For example, the electrolyte may be injected into the accommodation space of the cell case 110 through the injection port 152 formed in the cap plate 150.

After the injecting an electrolyte (S170) is performed, sealing the injection port (S180) may be performed. The sealing the injection port (S180) may include sealing the injection port 152 with the injection port cap 153.

Thereafter, subsequent processes such as a formation process may be performed.

The above-described method of manufacturing the battery cell 100 (S100) is merely an example, and depending on the shape or structure of the battery cell 100, the order may be changed, a portion of the processes may not be performed, or an additional process may be performed therebetween.

FIG. 17 is a cross-sectional diagram illustrating a welding process (S140) for the electrode terminal illustrated in FIGS. 11 to 14.

Referring to FIG. 17 together with FIG. 11 to FIG. 14, a welding groove 146 for welding between the electrode terminal 140 and the protrusion 133b may be formed on the top portion of the coupling groove 145 of the electrode terminal 140. The welding process (S140) may include welding the electrode terminal 140 and the protrusion 133b by irradiating a laser beam along the welding groove.

The welding groove 146 may be formed on the first portion 141 of the electrode terminal 140, and may have a recessed shape from the top surface 141a of the first portion 141 to the bottom side. Since the welding groove 146 may form a path through which the laser beam is irradiated, welding of the electrode terminal 140 may be easily performed.

Since the welding groove 146 is recessed in the top surface 141a of the electrode terminal 140, protrusion of the welding bead or the cured region W after melting beyond the top surface 141a of the electrode terminal 140 may be prevented or reduced during the welding process (S140). Since the top surface 141a of the electrode terminal 140 may maintain a flat surface even after welding the electrode terminal 140 and the protrusion 133b, the process of electrically connecting the electrode terminal 140 to another battery cell or battery module may be easily performed.

The detailed description of the welding groove 146 may be applied to the descriptions of the example in FIGS. 11 to 14.

FIG. 18 is a perspective diagram illustrating a battery module according to a preferred embodiment.

Referring to FIG. 18, a battery module 200 according to a preferred embodiment includes a plurality of battery cells 100 and a module housing 210 in which the plurality of battery cells 100 are accommodated.

The battery cell 100 provided in the battery module 200 may be applied to at least one of the battery cells 100 described with reference to FIGS. 1 to 14.

As long as the battery module 200 in a preferred embodiment includes a plurality of battery cells 100, the specific type thereof may not be limited. For example, the battery module 200 in a preferred embodiment may be defined as including the entirety of a battery pack or an energy storage device.

The module housing 210 may provide a space in which the plurality of battery cells 100 are accommodated. The module housing 210 may include a housing body 211 forming a space in which the plurality of battery cells 100 are accommodated, and a housing cover 215 covering a top side of the plurality of battery cells 100.

According to the aforementioned embodiments, defects caused by foreign substances during coupling of an electrode terminal and a current collector may be addressed (resolved/improved).

Also, foreign substances (impurities) caused by welding of an electrode terminal and a current collector may be prevented from affecting internal components of a battery cell.

Also, damages to an electrode assembly caused by welding heat may be addressed.

Also, rigidity of an electrode terminal may improve.

Also, a process of electrically connecting an electrode terminal to another battery cell or battery module may be performed.

Also, electrical connection between an electrode terminal and a current collector may be stably guaranteed.

Also, weldability and/or working speed of an electrode terminal may be improved.

(Aspect 1) A battery cell, comprising: a cell case including a sidewall forming an accommodation space therein and a top plate having a through-hole formed therein; an electrode terminal coupled to the through-hole and having a coupling groove formed in a bottom portion; an electrode assembly disposed in the accommodation space of the cell case; and a first current collector electrically connecting the electrode terminal to the electrode assembly, wherein the first current collector includes a connection terminal having a protrusion inserted and coupled to the coupling groove, wherein the protrusion is coupled to the electrode terminal by welding performed on an outer side of the cell case in a state of being inserted and coupled to the coupling groove, and wherein, in a welded region where the protrusion and the electrode terminal are welded, a thickness of the connection terminal has a value equal to or greater than that of a thickness of the electrode terminal.

(Aspect 2) The battery cell of aspect 1, wherein the protrusion is provided as a solid-type, an internal portion of which is filled.

(Aspect 3) The battery cell of aspect 1 or aspect 2, wherein the first current collector further includes a current collecting plate electrically connected to a first electrode tab of the electrode assembly, and wherein the current collecting plate is connected to the connection terminal, preferably wherein the connection terminal further includes a support portion coupled to the current collecting plate, and wherein the protrusion has a shape extending from the support portion and passing through an opening formed in the current collecting plate.

(Aspect 4) The battery cell of aspect 3, wherein the current collecting plate and the connection terminal are manufactured separately and coupled to each other or integrated with each other.

(Aspect 5) The battery cell of any one of aspects 1 to 4, wherein a side surface of the protrusion includes an inclined surface, and wherein the inclined surface has a shape in which a width of a top side is narrower than a width of a bottom side.

(Aspect 6) The battery cell of any one of aspects 1 to 5, wherein the cell case has a circular cross-sectional shape, and wherein the through-hole is formed in a center of the top plate.

(Aspect 7) The battery cell of any one of aspects 1 to 6, further comprising: a first gasket disposed between the electrode terminal and the through-hole and having electrical insulation properties, wherein the electrode terminal is rivet-coupled to the through-hole of the cell case.

(Aspect 8) The battery cell of any one of aspects 1 to 7, wherein the electrode terminal has a welding groove for welding between the electrode terminal and the protrusion, formed in a top portion of the coupling groove, preferably wherein the welding groove includes a spiral shape on a plane or includes at least one closed curve.

(Aspect 9) The battery cell of any one of aspects 1 to 8, wherein the sidewall has a tube shape, and the top plate has a plate shape covering a top side of the accommodation space, and wherein the sidewall and the top plate are integrated with each other, or the sidewall and the top plate are coupled to each other by welding.

(Aspect 10) The battery cell of any one of aspects 1 to 9, further comprising: a cap plate covering a bottom side of the accommodation space of the cell case, wherein the cap plate is crimping-coupled or welded and coupled to the cell case.

(Aspect 11) The battery cell of any one of aspects 1 to 10, further comprising: a second current collector electrically connected to a second electrode tab of the electrode assembly; and a cap plate covering a bottom side of an accommodation space of the cell case, wherein the second current collector is electrically connected to at least one of the cap plate or the sidewall of the cell case.

(Aspect 12) A method of manufacturing a battery cell, the method comprising: rivet-coupling an electrode terminal to a through-hole formed in a top plate of a cell case having a shape of which a bottom side is open; electrically connecting a first current collector to an electrode assembly; inserting the electrode assembly into an accommodation space of the cell case; and welding the electrode terminal to the first current collector, wherein the first current collector includes a connection terminal having a protrusion inserted and coupled to a coupling groove formed in a bottom portion of the electrode terminal, wherein the welding includes welding the electrode terminal to the protrusion by applying energy on an outer side of the cell case in a state in which the protrusion is inserted and coupled to the coupling groove, and wherein, in a welded region where the protrusion and the electrode terminal are welded, a thickness of the connection terminal has a value equal to or greater than that of a thickness of the electrode terminal.

(Aspect 13) The method of aspect 12, having one or more of the following characteristics (i) to (iii), respectively alone or in combination: (i) the cell case includes a sidewall having a tube shape and forming the accommodation space and a top plate having a plate shape and covering a top side of the accommodation space, and the sidewall and the top plate are integrated with each other, (ii) the first current collector further includes a current collecting plate electrically connecting a first electrode tab of the electrode assembly to the connection terminal, and the current collecting plate and the connection terminal are manufactured separately and coupled to each other by welding or integrated with each other by forging, and/or (iii) the electrode terminal has a welding groove for welding between the electrode terminal and the protrusion, formed in a top portion of the coupling groove, and the welding includes welding the electrode terminal to the protrusion by irradiating a laser beam along the welding groove.

(Aspect 14) The method of aspect 12 or aspect 13, further comprising: installing a cap plate on an open bottom side of the cell case, wherein the installing the cap plate includes crimping or welding the cap plate to the cell case.

(Aspect 15) A battery module, comprising: a plurality of battery cells; and a module housing configured to accommodate the plurality of battery cells, wherein at least one of the plurality of battery cells includes: a cell case including a sidewall forming an accommodation space therein and a top plate having a through-hole formed therein; an electrode terminal coupled to the through-hole and having a coupling groove formed in a bottom portion; an electrode assembly disposed in the accommodation space of the cell case; and a first current collector electrically connecting the electrode terminal to the electrode assembly, wherein the first current collector includes a connection terminal having a protrusion inserted and coupled to the coupling groove, wherein the protrusion is coupled to the electrode terminal by welding performed on an outer side of the cell case in a state of being inserted and coupled to the coupling groove, and wherein, in a welded region where the protrusion and the electrode terminal are welded, a thickness of the connection terminal has a value equal to or greater than that of a thickness of the electrode terminal.

## Claims

1. A battery cell, comprising:
a cell case including a sidewall forming an accommodation space therein and a top plate having a through-hole formed therein;
an electrode terminal coupled to the through-hole and having a coupling groove formed in a bottom portion;
an electrode assembly disposed in the accommodation space of the cell case; and
a first current collector electrically connecting the electrode terminal to the electrode assembly,
wherein the first current collector includes a connection terminal having a protrusion inserted and coupled to the coupling groove,
wherein the protrusion is coupled to the electrode terminal by welding performed on an outer side of the cell case in a state of being inserted and coupled to the coupling groove, and
wherein, in a welded region where the protrusion and the electrode terminal are welded, a thickness of the connection terminal has a value equal to or greater than that of a thickness of the electrode terminal.

2. The battery cell of claim 1, wherein the protrusion is provided as a solid-type, an internal portion of which is filled.

3. The battery cell of claim 1 or claim 2,
wherein the first current collector further includes a current collecting plate electrically connected to a first electrode tab of the electrode assembly, and wherein the current collecting plate is connected to the connection terminal,
preferably wherein the connection terminal further includes a support portion coupled to the current collecting plate, and wherein the protrusion has a shape extending from the support portion and passing through an opening formed in the current collecting plate.

4. The battery cell of claim 3, wherein the current collecting plate and the connection terminal are manufactured separately and coupled to each other or integrated with each other.

5. The battery cell of any one of claims 1 to 4,
wherein a side surface of the protrusion includes an inclined surface, and
wherein the inclined surface has a shape in which a width of a top side is narrower than a width of a bottom side.

6. The battery cell of any one of claims 1 to 5,
wherein the cell case has a circular cross-sectional shape, and
wherein the through-hole is formed in a center of the top plate.

7. The battery cell of any one of claims 1 to 6, further comprising:
a first gasket disposed between the electrode terminal and the through-hole and having electrical insulation properties,
wherein the electrode terminal is rivet-coupled to the through-hole of the cell case.

8. The battery cell of any one of claims 1 to 7, wherein the electrode terminal has a welding groove for welding between the electrode terminal and the protrusion, formed in a top portion of the coupling groove,
preferably wherein the welding groove includes a spiral shape on a plane or includes at least one closed curve.

9. The battery cell of any one of claims 1 to 8,
wherein the sidewall has a tube shape, and the top plate has a plate shape covering a top side of the accommodation space, and
wherein the sidewall and the top plate are integrated with each other, or the sidewall and the top plate are coupled to each other by welding.

10. The battery cell of any one of claims 1 to 9, further comprising:
a cap plate covering a bottom side of the accommodation space of the cell case,
wherein the cap plate is crimping-coupled or welded and coupled to the cell case.

11. The battery cell of any one of claims 1 to 10, further comprising:
a second current collector electrically connected to a second electrode tab of the electrode assembly; and
a cap plate covering a bottom side of an accommodation space of the cell case,
wherein the second current collector is electrically connected to at least one of the cap plate or the sidewall of the cell case.

12. A method of manufacturing a battery cell, the method comprising:
rivet-coupling an electrode terminal to a through-hole formed in a top plate of a cell case having a shape of which a bottom side is open;
electrically connecting a first current collector to an electrode assembly;
inserting the electrode assembly into an accommodation space of the cell case; and
welding the electrode terminal to the first current collector,
wherein the first current collector includes a connection terminal having a protrusion inserted and coupled to a coupling groove formed in a bottom portion of the electrode terminal,
wherein the welding includes welding the electrode terminal to the protrusion by applying energy on an outer side of the cell case in a state in which the protrusion is inserted and coupled to the coupling groove, and
wherein, in a welded region where the protrusion and the electrode terminal are welded, a thickness of the connection terminal has a value equal to or greater than that of a thickness of the electrode terminal.

13. The method of claim 12, having one or more of the following characteristics (i) to (iii), respectively alone or in combination:
(i) the cell case includes a sidewall having a tube shape and forming the accommodation space and a top plate having a plate shape and covering a top side of the accommodation space, and the sidewall and the top plate are integrated with each other,
(ii) the first current collector further includes a current collecting plate electrically connecting a first electrode tab of the electrode assembly to the connection terminal, and the current collecting plate and the connection terminal are manufactured separately and coupled to each other by welding or integrated with each other by forging, and/or
(iii) the electrode terminal has a welding groove for welding between the electrode terminal and the protrusion, formed in a top portion of the coupling groove, and the welding includes welding the electrode terminal to the protrusion by irradiating a laser beam along the welding groove.

14. The method of claim 12 or claim 13, further comprising:
installing a cap plate on an open bottom side of the cell case,
wherein the installing the cap plate includes crimping or welding the cap plate to the cell case.

15. A battery module, comprising:
a plurality of battery cells; and
a module housing configured to accommodate the plurality of battery cells,
wherein at least one of the plurality of battery cells includes:
a cell case including a sidewall forming an accommodation space therein and a top plate having a through-hole formed therein;
an electrode terminal coupled to the through-hole and having a coupling groove formed in a bottom portion;
an electrode assembly disposed in the accommodation space of the cell case; and
a first current collector electrically connecting the electrode terminal to the electrode assembly,
wherein the first current collector includes a connection terminal having a protrusion inserted and coupled to the coupling groove,
wherein the protrusion is coupled to the electrode terminal by welding performed on an outer side of the cell case in a state of being inserted and coupled to the coupling groove, and
wherein, in a welded region where the protrusion and the electrode terminal are welded, a thickness of the connection terminal has a value equal to or greater than that of a thickness of the electrode terminal.
